# EUROPÄISCHE PATENTANMELDUNG

(11) **EP 2 837 357 A1**
(43) Veröffentlichungstag der Anmeldung: **18.02.2015**
(21) Anmeldenummer: 13198878.4
(22) Anmeldetag: 20.12.2013
(51) Int. Cl.: A61C 13/00, A61C 8/00

(54) **Haltevorrichtung für einen Abutmentrohling, Abutmentrohling, System bestehed aus der Halterung und dem Abutmentrohling und Verfahren zum Haltern und Bearbeiten des Abutmentrohlings**

(30) Priorität: 14.08.2013 EP 13180431
(71) Anmelder: Medentika GmbH, 76549 Hügelsheim (DE)
(72) Erfinder: Fix, Frank, 75196 Remchingen (DE)
(74) Vertreter: Durm & Partner

(57) **Zusammenfassung**

Haltevorrichtung zum Halten eines Abutmentrohlings. Der Abutmantrohling weist ein Implantatinterface, ein sich an das Implantatinterface anschließenden Bearbeitungsabschnitt und einen von dem Implantatinterface beabstandeten Halteabschnitt mit einem Ausrichtungselement auf. Die Haltevorrichtung umfasst einen Grundkörper mit einer Halteaufnahme zum Halten des Abutmentrohlings. Die Halteaufnahme umfasst ein Positionierelement . Die Halteaufnahme korrespondiert mit dem Halteabschnitt des Abutmentrohlings derart, dass das Positionierelement der Halteaufnahme mit dem Ausrichtungselement des Abutmentrohlings zusammenwirkt, so dass der Abutmentrohling mit seinem Halteabschnitt in der Halteaufnahme verdrehsicher in einer vorgegebenen Position gehalten wird, dass das Implantatinterface von der Haltevorrichtung beabstandet ist und dass der sich an das Implantatinterface anschließende Bearbeitungsabschnitt des Abutmentrohlings frei zugänglich für die Bearbeitung ist.

## Beschreibung

Die vorliegende Erfindung betrifft eine Haltevorrichtung für einen Dental-Abutmentrohling zum Halten des Rohlings, einen Abutmentrohling, ein System umfassend einen Abutmentrohling und eine Haltevorrichtung zum Halten des Rohlings sowie ein Verfahren zum Halten und zur Bearbeitung eines Abutmentrohlings mittels einer Haltevorrichtung.

Bei künstlichem Zahnersatz können Implantate gesetzt werden, wobei das Implantat in den Kieferknochen des Patienten eingelassen wird. Auf dieses Implantat wird ein Abutment gesteckt, das einen stiftartigen Aufbau bietet, der einem Zahnstumpf bei einer Krone entspricht. Auf dem Abutment wird ist der künstliche Zahnersatz aufgesetzt. Dabei ist der künstliche Zahn individuell modelliert, so dass er den ursprünglichen Zahn möglichst originalgetreu ersetzt und sich an die vorhandenen natürlichen Zähne möglichst unauffällig einpasst. Für einen optimalen Sitz und eine optimale Gestaltung des künstlichen Zahns ist auch das Abutment individuell anzupassen. Hierbei kann es vorteilhaft sein, entsprechend der vorhandenen oralen Anatomie (Mundanatomie) und den noch vorhandenen natürlichen Zähnen das Abutment beispielsweise zu neigen oder zu verdrehen oder je nach Anwendungseinsatz in einer bestimmten Position zu halten. Teilweise ist auch eine bestimmte Formgebung gewünscht.

Um eine gewünschte Position zu verwirklichen, wird das Abutment in einer rotationsfixierten Lage in das Implantat eingesetzt. Die Verbindung zwischen Implantat und Abutment bietet das Implantatinterface, das Teil des Abutments ist. Dieses stellt eine formschlüssige Verbindung zu dem Implantat her. Um das Abutment mit dem Implantat zu fixieren, ist es üblich, eine Schraube durch eine konzentrische Bohrung des Implantatinterfaces des Abutments in das Implantat einzuschrauben. Auf diese Weise wird das Abutment dauerhaft mit dem Implantat fixiert.

Da bei hochwertigem Zahnersatz das Abutment eine individuelle Anfertigung ist, wird es vom Zahnlabor in jedem Einzelfall gefertigt. Dazu stehen Abutmentrohlinge zur Verfügung, die bereits das Implantatinterface, auch Implantatanschluss genannt, zur Verfügung stellen. Dieser Dental-Abutmentrohling wird von dem Zahntechniker individuell bearbeitet. Allerdings ist die hierbei durchzuführende Präzision und Genauigkeit geringer als es in einer industriellen Fertigung möglich ist. Da jedoch das Zusammenspiel von Implantat und Abutment extrem wichtig ist für die dauerhafte Haltbarkeit des künstlichen Zahns, wird das Implantatinterface industriell vorgefertigt. Hierbei kann höchste Präzision eingehalten werden, so dass ein höchst exakter Sitz des Abutments im Implantat gewährleistet ist. Das Implantatinterface hat in der Regel eine indexierende Außenkontor und ist meist herstellerspezifisch. Sie erlaubt das Abutment in vorgegebenen Rotationspositionen in das Implantat einzusetzen.

Die Bearbeitung des Abutmentrohlings zur Herstellung des individuellen Abutments kann dann in dem Zahnlabor erfolgen. Dabei wird in der Regel ein Emergenzprofil mit einer Schulter modelliert, das dem Implantatanschluss benachbart ist. Hieran anschließend in Richtung dem Implantatinterface abgewandten Ende schließt der individuelle Aufbau an. Er bietet die Auflagefläche für den künstlichen Zahn und entspricht im Wesentlichen einem Zahnstumpf.

Zur Bearbeitung der Abutmentrohlinge sind Vorrichtungen zur Halterung der Rohlinge bekannt, bei denen das Implantat simuliert wird. Die Halterung weist folglich eine dem Implantat entsprechende Aufnahme auf, in der der Abutmentrohling mit seinem Implantatanschluss hineingesteckt und gehalten werden kann. In der Regel wird der Abutmentrohling auf ein sogenanntes Laborimplantat montiert, das wiederum in der Aufnahme der Halterung fixiert wird. Rohling und Laborimplantat werden miteinander verschraubt. Auf diese Weise ist eine Bearbeitung des Abutmentrohlings möglich. Da das Implantatinterface eine Außenkontur aufweist, die in der Regel ein Außensechskant ist, ist die Position des Rohlings in der Halterung für die Bearbeitung entscheidend, insbesondere bei individuell angefertigten Abutments. Die Bearbeitung kann generell auch automatisiert mit Bearbeitungsmaschinen oder Fräsmaschinen erfolgen. Da der Abutmentrohling am Implantatanschluss gehalten wird, lässt sich der Rohlingkorpus frei zugänglich bearbeiten. So kann ein für den Patienten individuell gestaltetes Abutment erzeugt werden.

Aufgabe der vorliegenden Erfindung ist es somit, einen Halter für einen (Dental-)Abutmentrohling zu schaffen, mit dem eine einfache und kostengünstige Bearbeitung möglich ist, wobei eine einwandfreie und langfristige Funktion des Abutments gesichert werden soll.

Gelöst wird die vorliegende Aufgabe mit einer Haltevorrichtung zum Halten eines Dental-Abutmentrohlings gemäß Anspruch 1, mit einem System umfassend einen Dental-Abutmentrohling und einer Haltevorrichtung zum Halten des Rohlings gemäß Anspruch 2, mit einem Abutmentrohling gemäß Anspruch 11 zum Halten in einer Haltevorrichtung sowie mit einem Verfahren zum Halten und Bearbeiten eines Abutmentrohlings gemäß Anspruch 12.

Im Rahmen der Erfindung wurde festgestellt, dass es bei der Bearbeitung des Dental-Abutmentrohlings zu Vibrationen kommt, die Kräfte auf den Implantatanschluss (auch Implantatinterface genannt) ausüben, wenn der Rohling am Implantatanschluss gehalten wird. Hierdurch kann es bei starker und umfangreicher Bearbeitung im Einzelfall zu einer hohen Beanspruchung des Implantatanschlusses des Abutmentrohlings kommen, die im Einzelfall auch zu einer Beschädigung führen kann. Es wurde erkannt, dass der Implantatanschluss des Abutmentrohlings eine entscheidende Rolle für eine einwandfreie Funktion des Abutments im Implantat spielt und er deshalb bei der Bearbeitung des Abutmentrohlings und der Herstellung des Abutments nicht beschädigt werden und keine Kräfte aufnehmen darf.

Der Erfindung liegt weiter die Erkenntnis zugrunde, dass der Abutmentrohling für die Bearbeitung auch an einem vom Implantatinterface beabstandeten Bereich (Halteabschnitt), bevorzugt an einem distal zum Implantatinterface angeordneten Bereich des Rohlingkorpus des Abutmentrohlings gehalten werden kann. Während am ersten Ende des Rohlingkorpus der industriell vorgefertigte Implantatanschluss angeordnet ist, ist bevorzugt an einer anderen Stelle des Rohlingkorpus, die von dem Implantatinterface beabstandet ist, ein Halteabschnitt am Rohlingkorpus vorhanden. Bevorzugt ist der Halteabschnitt am zweiten Ende des Abutmentrohlings angeordnet, bevorzugt gegenüber dem Implantatinterface.

Das Implantatinterface hat in der Regel eine eindeutige Außenkontur für einen eindeutigen Sitz im Implantat. Die Außenkontur kann beispielsweise die Form eines Außen-Sechskants, eines Mehrkants oder eine Polygons aufweisen oder eine andere beliebige Form haben, die eine eindeutige Ausrichtung des Abutments erlaubt. Die eindeutige Ausrichtung des Abutments bzw. des Aufbauteils des Abutments in Bezug zu dem Interface bzw. der Außenkontur des Implantatinterfaces muss schon bei der Herstellung des Abutments aus dem Rohling berücksichtigt werden. Es wurde erkannt, dass eine sehr präzise und eindeutige Ausrichtung für hochqualitative Abutments notwendig ist und die Ausrichtung einen großen Einfluss auf die Güte der Passform des Abutments und des künstlichen Zahns im Mund hat. Eine fehlerhafte Ausrichtung oder zu große Toleranzen bewirken einen falschen Sitz im Mund, so dass der künstliche Zahn Druck auf die Nachbarzähne erzeugt. Ein ungenauer Sitz fördert das Eindringen von Bakterien zwischen Zahn und Implantat, was Entzündungen und Beschwerden beim Patienten hervorrufen kann.

Erfindungsgemäß hat die Haltevorrichtung einen Grundkörper mit einer Halteaufnahme, die den Abutmentrohling hält oder aufnimmt. Die Halteaufnahme und der Abutmentrohling bzw. sein Halteabschnitt korrespondieren miteinander, vorzugsweise so, dass ein Formschluss entsteht. Dabei wird der Abutmentrohling mit seinem Halteabschnitt in der Halteaufnahme gehalten. Die Haltevorrichtung weist eine Verdrehsicherung auf, die ein Verdrehen des Abutmentrohlings, insbesondere um seine Längsachse, verhindert. Die Halteaufnahme und der Halteabschnitt des Rohlings weisen deshalb jeweils Kopplungsmittel auf, die miteinander korrespondieren und zusammenwirken. Die Halteaufnahme umfasst ein Positionierelement als erstes Kopplungsmittel. Der Abutmentrohling hat ein Ausrichtungselement als zweites Kopplungsmittel, das bevorzugt am Halteabschnitt des Rohlings angeordnet ist. Das Halten erfolgt derart, dass der Abutmentrohling verdrehsicher und in einer vorgegebenen Position gehalten wird, um den Rohling bevorzugt maschinell und automatisiert bearbeiten zu können. Das Halten in einer vordefinierten Position ist vorteilhaft, teilweise notwendig, um den sogenannten Stiftaufbau des Abutments relativ zu der Außenkontur des Implantatinterfaces herstellen zu können.

Beim Halten des Abutmentrohlings ist das Implantatinterface des Abutmentrohlings von der Haltevorrichtung, vorzugsweise von der Halteaufnahme beabstandet. Somit wird der Abutmentrohling derart in der Halteaufnahme gehalten, dass der Implantatanschluss bzw. das Implantatinterface keine direkte Verbindung und keinen Kontakt zur Haltevorrichtung hat. Das insbesondere von dem Grundkörper beabstandete Interface ist bevorzugt frei zugänglich.

Wird der Rohling in der Halteaufnahme gehalten, ist ein sich an das Implantatinterface anschließender Bearbeitungsbereich des Abutmentrohlings für die Bearbeitung des Rohlings frei zugänglich. Dieser Bearbeitungsabschnitt des Rohlings ist der Bereich des Rohlingkorpus, der bearbeitet wird und der beim fertig bearbeitetem Abutment des Emergenzprofil und den Aufbau (Stiftaufbau) mit den Auflageflächen für den künstlichen Zahn bildet.

Bevorzugt hat der Grundkörper der Haltevorrichtung mehrere Halteaufnahmen, um mehrere Abutmentrohlinge gleichzeitig zu halten, die beispielsweise in einem Arbeitsgang bearbeitet werden können. Somit ist eine automatisierte maschinelle Bearbeitung mehrerer Rohlinge parallel oder nacheinander möglich, ohne einen Rohling aus der Haltevorrichtung entfernen zu müssen, bevor ein weiterer bearbeitet werden kann. Auch lassen sich einzelne Bearbeitungsschritte an mehreren Rohlingen durchführen, bevor ein weiterer Bearbeitungsschritt erfolgt. Die Halteaufnahmen können beispielsweise nebeneinander oder an unterschiedlichen, bevorzugt gegenüberliegenden Seiten des Grundkörpers angeordnet sein. Sie können eine Ausnehmung umfassen, beispielsweise eine Sackbohrung oder eine Durchgangsbohrung.

In einer bevorzugten Ausführungsform der Haltevorrichtung hat der Grundkörper einen Ausschnitt oder eine Ausnehmung, die einen Bearbeitungsraum bildet, in den sich die gehaltenen Abutmentrohlinge wenigstens teilweise hinein erstrecken. Die Ausnehmung kann eine Kavität oder Höhle oder ähnliches sein. Bevorzugt ist die Ausnehmung von wenigstens zwei Seiten zugänglich.

Bevorzugt wird der sich bildende Bearbeitungsraum wenigstens teilweise von Teilen des Grundkörpers umschlossen. Beispielsweise kann der Ausschnitt in der Haltevorrichtung ein Durchbruch sein. Der Grundkörper der Haltevorrichtung bildet eine Umfassung oder einen Rahmen mit innenliegenden (Anlage-) Flächen oder Innenflächen. Der Rahmen fasst die Ausnehmung ein. Es entsteht ein Bearbeitungsraum zwischen den Innenflächen, der von zwei Seiten zugänglich und offen ist. Vorzugsweise ist an wenigstens einer der Innenflächen eine Halteaufnahme angeordnet, so dass sich der zu bearbeitende Abutmentrohling in den Bearbeitungsraum hineinerstreckt, wenn er in der Halteaufnahme gehalten wird. Es können auch mehrere Halteaufnahmen in einer Innenfläche angeordnet sein. Sie sind bevorzugt eine Sackbohrung oder eine Durchgangsbohrung und korrespondieren mit dem Halteabschnitt des Abutmentrohlings derart, bevorzugt formschlüssig, dass der Halteabschnitt des Abutmentrohlings in der Halteaufnahme verdrehsicher in einer vorgegebenen Position gehalten wird, um eine eindeutige Positionierung des Rohlings zu ermöglichen.

In einer bevorzugten Ausführungsform ist der Rohlingkorpus des Abutmentrohlings zylinderförmig. Ein Haltesystem bestehend aus der Haltevorrichtung und dem Abutmentrohling weist eine Verdrehsicherung auf, die aus dem Positionierelement der Haltevorrichtung und dem Ausrichtungselement des Abutmentrohlings gebildet wird. Bevorzugt ist das Ausrichtungselement eine Nut, die bevorzugt vom freien Ende des Halteabschnitts aus zugänglich ist. Ebenfalls bevorzugt ist das Positionierelement ein Steg oder ein Stift oder ein ähnliches Bauteil oder eine Anformung in der Halteaufnahme der Haltevorrichtung. Insbesondere durch die Verwendung von Nut und Stift bzw. Steg lässt sich eine Verdrehsicherung mit sehr geringer Toleranz und hoher Präzision erzeugen. Selbstverständlich kann auch das Positionierelement eine Nut sein und das Ausrichtungselement ein Steg oder Stift o.ä.. Andere miteinander korrespondierende Kopplungsmittel sind ebenfalls denkbar. So lässt sich eine rotationsindexierte Ausrichtung des Rohlings sicherstellen.

Es ist bevorzugt auch möglich, dass die Verdrehsicherung bzw. die Kopplungsmittel, also das Positionier- und das Ausrichtungselement, durch die Geometrie oder die Kontur der Halteaufnahme und des Halteabschnitts gebildet werden.

Die Querschnittsform der Halteaufnahme muss lediglich mit der Querschnittsform des Halteabschnitts des Abutmentrohlings korrespondieren. Beispielsweise kann der Halteabschnitt des Abutmentrohlings nicht rotationssymmetrisch sein. Er kann einen ovalen oder eckigen Querschnitt aufweisen. Der Querschnitt kann rechteckig, quadratisch, dreieckig oder rund sein. Selbstverständlich sind auch beliebige eindeutige Formen als Querschnitt möglich, die beispielsweise mathematisch durch ein Polygon beschrieben werden können. Es ist lediglich wichtig, dass die Halteaufnahme und der Halteabschnitt korrespondierende Querschnitte aufweisen, so dass bevorzugt ein Formschluss erfolgen kann. Auf diese Weise lässt sich also ebenfalls eine Verdrehsicherung realisieren, so dass der Rohling verdrehsicher und in einer vorgewählten Ausrichtung in der Haltevorrichtung gehalten wird.

Die Halteverbindung kann beispielsweise dadurch erfolgen, dass die beiden Kopplungsmittel derart miteinander gekoppelt werden können, dass eine formschlüssige und/oder kraftschlüssige Verbindung entsteht, die jedoch lösbar ist. Beispielsweise können die Kopplungsmittel je ein Gewinde haben, die miteinander korrespondieren, also in einander greifen.

In einer bevorzugten Ausführungsform ist die Halteaufnahme der Haltevorrichtung eine Bohrung, besonders bevorzugt eine Sackbohrung mit einem Boden. In diese Sackbohrung wird der Rohlingkorpus des Abutmentrohlings mit seinem vorzugsweise distalen Ende, das besonders bevorzugt dem Implantatinterface gegenüberliegt, gehalten. Bevorzugt wird dazu der Halteabschnitt des Rohlingkorpus in die Halteaufnahme der Haltevorrichtung eingepasst. Eine lösbare Verbindung zwischen dem Abutmentrohling und der Haltevorrichtung wird vorzugsweise durch Formschluss und/oder alternativ durch Kraftschluss hergestellt.

Bevorzugt weist die Haltevorrichtung an der Halteaufnahme ein Fixierelement auf. Ein derartiges Fixierelement kann beispielsweise eine Klemmbacke oder Ähnliches sein, so dass der Abutmentrohling durch Klemmung in der Halteaufnahme gehalten wird. Die Klemmbacke kann dabei beispielsweise einstückig mit der Haltevorrichtung verbunden sein. Es ist auch möglich, eine Klemmbacke zu realisieren, die als separates Bauteil zur Verfügung steht. Diese wird bevorzugt durch Klemmmittel mit der Halteaufnahme so verbunden, dass eine Presspassung erfolgt. Beispielsweise kann die Klemmbacke mit der Halteaufnahme verschraubt werden. Alternativ oder zusätzlich kann eine magnetische Halteeinheit in die Haltevorrichtung integriert sein, z.B. ein Elektromagnet, um bevorzugt das Halten des Rohlings zu unterstützen.

In einer bevorzugten Ausführungsform sind die zu bearbeitenden Abutmentrohlinge zylindrisch und weisen somit einen runden Querschnitt auf. Die Halteaufnahme der Haltevorrichtung ist in dem Fall ebenfalls rund. Da die runde Querschnittsform keinen Rotationsschutz oder Verdrehschutz bietet, müssen Verdrehsicherungsmittel vorgesehen sein. Beispielsweise kann ein derartiges Verdrehsicherungsmittel durch die Kombination von Ausnehmung und Ausdehnung (Ausbuchtung) oder bevorzugt durch Nut und Stift, wie oben beschrieben, erfolgen. Ist der Halteabschnitt zylindrisch und die Haltevorrichtung korrespondierend dazu ausgebildet, kann der Halteabschnitt vollumfänglich durch das Fixierelement, bevorzugt durch das Klemmelement, geklemmt werden. Dadurch ist der Abutmentrohling besonders fest in der Halteaufnahme eingespannt, so dass bei der Bearbeitung Vibrationen des Abutmentrohlings minimiert werden. Dies macht es möglich, den Abutmentrohling mit hoher Präzision zu bearbeiten. Beispielsweise liegen die Fertigungstoleranzen bei der Bearbeitung des Abutmentrohlings im Bereich von ± 1/100 mm.

Um einen exakten Sitz des Abutmentrohlings in der Haltevorrichtung zu gewährleisten, kann in der Haltevorrichtung ein Überprüfungsmittel oder eine Beobachtungsöffnung vorgesehen sein, das den exakten Sitz des Abutmentrohlings in der Halteaufnahme des Halters signalisiert oder deren Sitz beobachtbar macht. Bevorzugt sind die Mittel optischer Art. Besonders bevorzugt wird ein Sichtfenster oder eine Sichtbohrung verwendet, um eine optische Kontrolle zu ermöglichen. Im einfachsten Fall weist die Haltevorrichtung eine Bohrung auf, mittels der der Halteabschnitt des Abutmentrohlings bei exakter Positionierung in der Halteaufnahme der Haltevorrichtung wenigstens teilweise beobachtet werden kann. Wenn die Halteaufnahme eine Sackbohrung mit einem Boden umfasst, weist die Haltevorrichtung bevorzugt eine Beobachtungsbohrung auf, die es ermöglicht, den Boden zu beobachten. Vorzugsweise ist die Bohrung zur Beobachtung an der Seite der Haltevorrichtung angeordnet. Besonders bevorzugt ist die Bohrung im Wesentlichen senkrecht zur Längsachse der Halteaufnahme oder des Abutmentrohlings. So ist beispielsweise beobachtbar, ob der Rohling den Boden der Halteaufnahme berührt.

Die optische Kontrolle des exakten Sitzes des Rohlings in der Halteaufnahme kann beispielsweise mit einer optischen Mess- und Auswerteeinheit durchgeführt werden. Sie kann eine Kamera oder Fotodioden o.ä. umfassen. Dies ist bei einer automatisierten Herstellung der Abutments vorteilhaft.

Der erfindungsgemäße Abutmentrohling hat ein Implantatinterface, einen sich an das Implantatinterface anschließenden Bearbeitungsabschnitt und einen von dem Implantatinterface beabstandeten Halteabschnitt mit einem Ausrichtungselement. Das Ausrichtungselement korrespondiert mit dem Positionierelement einer Halteaufnahme einer Haltevorrichtung. Durch deren Zusammenwirken wird der Abutmentrohling verdrehsicher in der Halteaufnahme gehalten.

In einer bevorzugten Ausführungsform werden Abutmentrohlinge verwendet, deren Rohlingkorpus ein Implantatinterface aufweist, wobei besonders bevorzugt das Implantatinterface mit einer Längsachse des Abutmentrohlings korrespondiert. In einer besonders bevorzugten Ausführungsform weist der Dental-Abutmentrohling eine Bohrung auf, die sich durch das Implantatinterface konzentrisch erstreckt. Durch diese Bohrung wird später, nach Herstellung des Abutments die Halteschraube hindurchgesteckt, die in das Implantat geschraubt wird und das Abutment in dem Implantat hält.

In einer bevorzugten Ausführungsform des Abutmentrohlings ist der Rohlingkorpus in seiner Längsausdehnung größer als das herzustellende Abutment.

Bevorzugt ist der Bearbeitungsabschnitt des Rohlings zylindrisch und weist an einem distalen zweiten Ende, das dem ersten Ende, an dem der Implantatanschluss angeordnet ist, gegenüberliegt, einen Halteabschnitt auf. Der bevorzugt ebenfalls zylindrische Halteabschnitt schließt sich an den Bearbeitungsabschnitt an. Der Halteabschnitt muss nicht zur Bearbeitung verwendet werden und nicht für den Aufbau des Abutments zur Verfügung stehen. Er hat ausschließlich eine Haltefunktion.

Bevorzugt sind die äußere Kontur des Halteabschnitts und des Bearbeitungsabschnitts gleich. Gleiches gilt bevorzugt für die Umfänge. Halteabschnitt und Bearbeitungsabschnitt gehen bevorzugt nahtlos in einander über, insbesondere bei einem zylindrischen Abutmentrohling. Halteabschnitt und Bearbeitungsabschnitt können auch in Form, Kontur und Umfangsgröße von einander abweichen. Bevorzugt ist der Halteabschnitt normiert und nur der Bearbeitungsabschnitt verschieden. So kann der Bearbeitungsabschnitt schon an die spätere Form des Abutments und des Stiftaufbaus angepasst sein.

In einer bevorzugten Ausführungsform sind die Abutmentrohlinge (Fräsrohlinge) aus Metall. Besonders bevorzugt ist der Rohling aus Titan, Edelstahl, Kobaltchrom (CoCr). Andere Materialien sind jedoch ebenfalls möglich, beispielsweise Keramik, Kunststoff oder Ähnliches.

Da der Abutmentrohling nur an dem Halteabschnitt gehalten wird, der von dem Implantatinterface beabstandet ist, ihm vorzugsweise gegenüber liegt, werden bei der Bearbeitung des Rohlings keine Kräfte auf das Interface (Implantatanschluss) ausgeübt. Dieser Implantatanschluss kann industriell mit gleichbleibend hoher Präzision (höchste Präzision) und minimalen Toleranzen (im Mikrometerbereich) vorgefertigt werden. Da die hohe Präzision des Implantatanschlusses von wesentlicher Bedeutung für eine einwandfreie und langfristige Funktion des Abutments im Implantat im Mund des Patienten ist, ist es wichtig, dass keinerlei Kräfte auf das Interface ausgeübt werden. Dies wird durch die erfindungsgemäße Haltevorrichtung sichergestellt.

In einer bevorzugten Ausführungsform weist die Haltevorrichtung eine Mehrzahl von Halteaufnahmen auf, so dass mehrere Abutmentrohlinge gleichzeitig gehalten werden können. Hierdurch ist eine schnellere und automatisierte Bearbeitung möglich.

Bevorzugt ist die Haltevorrichtung für die Abutmentrohlinge derart ausgebildet, dass sie in eine Standardaufnahme einer Bearbeitungsmaschine, beispielsweise einer Fräsmaschine eingesetzt werden kann. Auf diese Weise können die Abutments mit herkömmlichen Fräsmaschinen bearbeitet werden. Die Bearbeitung findet beispielsweise durch Fräsen, Drehen, Zerspanen oder ähnliche Bearbeitungsschritte statt, vorzugsweise automatisiert oder teilautomatisiert.

In einer bevorzugten Ausführungsform ist die Haltevorrichtung aus Edelstahl. Besonders bevorzugt ist sie massiv aus Edelstahl gefertigt. Es können selbstverständlich auch andere Materialien verwendet werden, bevorzugt ist die Haltevorrichtung aus Metall, beispielsweise auch aus Titan. Andere Materialien, auch Kunststoffe, sind denkbar.

Bevorzugt ist die Haltevorrichtung einstückig. Eine eventuelle Spannfunktion zum Einspannen oder Einklemmen des Abutmentrohlings in der Haltevorrichtung kann durch erodierte Schlitze in einem Spannbereich der Haltevorrichtung realisiert werden. Die Spannbacken, die durch die erodierten Schlitze hergestellt werden, können beispielsweise durch Schrauben mit der Grundform (Grundkörper) der Haltevorrichtung verschraubt werden, so dass eine Spannung auf den Halteabschnitt des Abutmentrohlings ausgeübt wird. Hierdurch lässt sich eine kraftschlüssige Verbindung erzeugen.

Zur individuellen Herstellung eines Abutments aus einem Dental-Abutmentrohling (Abutmentrohling) werden erfindungsgemäß mehrere Schritte ausgeführt. Zunächst wird eine Haltevorrichtung verwendet, die eine Halteaufnahme aufweist. Halteaufnahme und Halteabschnitt des Abutmentrohlings korrespondieren. In einem ersten Schritt wird bevorzugt die Halteaufnahme gegebenenfalls derart vorbereitet, dass sie zur Aufnahme des Abutmentrohlings bereit ist. Sind Klemmbacken oder ähnliche Spannvorrichtungen vorgesehen, um den Abutmentrohling kraftschlüssig zu halten, werden diese Spannvorrichtungen bevorzugt gelöst oder gelockert. In einem nächsten Schritt wird bevorzugt der Abutmentrohling mit seinem Halteabschnitt in die Halteaufnahme eingebracht, insbesondere eingesteckt. Dabei wird eine eindeutige rotatorische bzw. rotationsindexierte Ausrichtung des Abutmentrohlings im Halter erzeugt und gesichert. Der Rohling wird verdrehsicher in einer gewünschten Position gehalten. Dies kann beispielsweise dadurch erfolgen, dass eine nicht rotationssymmetrische Form des Halteabschnitts und der Halteaufnahme entsprechend korrespondieren oder dass eine Verdrehsicherung beispielsweise in Form von Nut und Stift oder Steg vorgesehen ist.

Bevorzugt erfolgt in einem optionalen zusätzlichen Schritt des Verfahrens eine optische Kontrolle, ob der Abutmentrohling seine axiale Endposition in der Halteaufnahme erreicht hat. Dies kann beispielsweise durch eine Sichtbohrung oder ein Sichtfenster erfolgen. Die optische Kontrolle kann manuell oder automatisiert, z.B. mittels einer Kamera, einer Fotodiode, einer Lichtschranke (jeweils sichtbar oder nicht sichtbar, z.B. infrarot) oder auch über elektrische Kontakte stattfinden.

In einem optionalen weiteren Schritt wird der Abutmentrohling bevorzugt in der Halteaufnahme fixiert. Beispielsweise kann dies dadurch geschehen, dass Spannbacken, Spannsegmente oder Klemmbacken angezogen werden oder sich schließen, so dass die formschlüssige Verbindung durch eine kraftschlüssige Verbindung komplettiert oder ergänzt oder ersetzt wird. Durch die Klemmung kann eine präzise und zuverlässige Halterung des Rohlings in der Halteaufnahme und eine Fixierung seiner Position erfolgen.

In einem weiteren Schritt wird die Haltevorrichtung bevorzugt in eine entsprechende Aufnahme einer Fräsmaschine eingespannt und dort befestigt.

Im nächsten Schritt erfolgt die Bearbeitung des Abutmentrohlings, wobei bevorzugt beginnend am proximalen Ende des Rohlingkorpus nahe des Implantatinterfaces zunächst ein Emergenzprofil mit einer Schulter erstellt wird. An dieses Emergenzprofil schließt sich ein Aufbau oder stiftartiger Abutmentbereich an. Das Abutment wird bevorzugt vollständig gefräst.

In einer bevorzugten Ausführungsform des Verfahrens bleiben das Abutment (respektive der Stiftaufbau) und der Halteabschnitt an wenigstens einer Stelle miteinander verbunden und werden gemeinsam aus der Haltevorrichtung entnommen. Sie werden in einem weiteren Schritt in einer manuellen Bearbeitung von einander getrennt. Es kann eine weitere Bearbeitung der Abutments erfolgen, z. B. durch manuelle Nachbearbeitung.

Alternativ wird bevorzugt in einem anderen Schritt des Verfahrens das Abutment am proximalen Ende des anzufertigenden Abutments durch einen Schnitt oder durch ein tiefes Fräsen von dem Halteabschnitt des Abutmentrohlings gelöst bzw. getrennt. In diesem Bearbeitungsschritt wird das Abutment von dem Halteabschnitt getrennt, so dass es bevorzugt aus der Haltevorrichtung herausfällt. Vorzugsweise wird es durch eine Fangvorrichtung aufgefangen oder aufgenommen, z.B. durch eine Auffangschale. Beispielsweise kann die Fangvorrichtung auch dadurch bestehen, dass ein Draht oder ein dünnes Seil zwischen der Haltevorrichtung und dem Implantatanschluss gespannt ist.

Im nächsten Bearbeitungsschritt wird bevorzugt die Haltevorrichtung von der Fräsmaschine gelöst. Die eventuell noch in der Vorrichtung gehaltenen Halteabschnitte der Abutmentrohlinge werden bevorzugt aus den Halteaufnahmen entfernt, so dass die Haltevorrichtung erneut zur Bearbeitung weiterer Abutmentrohlinge verwendet werden kann. Die Haltevorrichtung kann vor der Wiederverwendung gesäubert werden.

Bei Verwendung einer Haltevorrichtung mit mehreren Halteaufnahmen können mit dem Verfahren mehrere Rohlinge parallel oder durch Wiederholen einzelner Schritte sequentiell bearbeitet werden.

Die oben beschriebenen einzelnen Verfahrensschritte müssen nicht zwingend in der beschriebenen Reihenfolge erfolgen. Sie können jedenfalls teilweise automatisiert durchgeführt werden.

Da das Halten des Abutmentrohlings an dem distalen Halteabschnitt in der Haltevorrichtung erfolgt und auch nur hier ein Spannen stattfindet, so dass nur an dem Halteabschnitt Kräfte auftreten, werden keinerlei Kräfte auf das Implantatinterface übertragen. Der Halteabschnitt selbst wird nicht zur Herstellung des Abutments verwendet. Dadurch ergeben sich die Vorteile, dass die hohe Präzision des Implantatanschlusses erhalten bleibt, da keinerlei Kräfte auf den Implantatanschluss ausgeübt werden. Hierdurch ist eine einwandfreie und langfristige Funktion des Abutments im Implantat gesichert. Es findet keinerlei physikalische Belastung oder Beanspruchung des Implantatinterfaces während des Fräsvorgangs statt. Folglich kann keine Schwächung der dauerhaften Stabilität, der Haltbarkeit oder der Zuverlässigkeit des Abutments im Implantat durch die Herstellung des Abutments aus dem Abutmentrohling hervorgerufen werden.

Im folgenden werden nochmals die positiven Eigenschaften und Vorteile des Abutmentrohlings und der Haltevorrichtung sowie des Haltesystems aufgeführt:
Die Abutmentrohlinge sind bevorzugt zylindrisch und in zwei Durchmessern gestaltet. Mit Durchmessern von zwischen 9 mm und 13 mm, bevorzugt 11,5 mm und zwischen 14 mm und 21 mm, bevorzugt 16 mm sorgen sie für die notwendige Variabilität. Der Halteabschnitt hat bevorzugt den kleineren Durchmesser, also vorzugsweise 11,5 mm. Die Durchmesser garantieren durch eine bevorzugt einheitliche Länge eine exakte Nullpunktdefinition für die Bearbeitung. Die Vorteile der erfindungsgemäßen Abutments auf einen Blick:
   - Kurze Bearbeitungszeiten in der Produktion - durch zwei Rohlingsdurchmesser
   - Maximale Freiheit im Design - durch optimierte Auswahl der Fräsrohlinge
   - Maximaler Schutz für das exakt gestaltete Implantatinterface - durch Spannen des Abutments bevorzugt lediglich auf der Stirnseite. Selbstverständlich kann der Halteabschnitt des Rohlings auch an einem Seitenbereich des Abutmentrohlingkorpus sein. Er muss lediglich von dem Implantatinterface derart beabstandet sein, dass keine Kräfte auf das Interface wirken.
   - Höchste Präzision im Implantatinterface - durch vorgefertigte, standardisierte Fertigungsprozesse
   - Mehr Freiheit bei der Gestaltung des Emergenzprofils - durch besondere Ausgestaltung der Rohlinge und durch uneingeschränkte Zugänglichkeit des Rohlings bei der Bearbeitung. Dies wird unter anderem dadurch erreicht, indem der Fräsrohlings nicht am Interface sondern am gegenüberliegenden Halteabschnitt gespannt wird.

Die erfindungsgemäßen Abutmenthalter (Haltevorrichtungen) bieten eine ausgezeichnete Wertschöpfung. Die optimale Auswahl der Rohlinge, die minimale Anzahl der Komponenten und die Vorteile einer automatisierten Produktion führen zu extrem effizienten Fertigungsprozessen. Trotz immenser Flexibilität in der Ausgestaltung der Produktion, wird ein Gesamtsystem zur Verfügung gestellt. Die Vorteile des erfindungsgemäßen Abutmenthalters auf einen Blick:
- Wesentlich präzisere Fertigung als mit herkömmlichen Haltern - durch die innovative, einteilige Bauweise
- Kurze Produktionszeiten - durch die gleichzeitige Bearbeitung von mehreren, bevorzugt sechs Rohlingen in einem Arbeitsgang
- Besonders zeitsparende Arbeitsweise - durch bevorzugt Spannung des Abutments mit bevorzugt lediglich einer Schraube im Halter, beispielsweise mittels Klemmvorrichtung
- Maximaler Schutz für das exakt gestaltete Implantatinterface - durch bevorzugt Spannen des Abutments bevorzugt lediglich auf/an der Stirnseite
- Sehr übersichtliche und für Fehler nicht anfällige Produktion - durch minimale Anzahl der Komponenten
- Extrem günstige Investition - durch die einfache Bauweise des Abutmenthalters und die Vermeidung teurer Verschleißteile

Die beiliegenden Zeichnungen beschreiben eine besondere Ausführungsform eines Abutmentrohlinghalters bzw. einer Haltevorrichtung. Hierin sind einige Besonderheiten aufgeführt, die einzeln oder in Kombination, auch in anderen Konfigurationen, Verwendung finden können. Die einzelnen im Folgenden noch beschriebenen Merkmale des Abutmenthalters können in anderen ähnlichen Abutmenthaltern teilweise oder in anderer Form realisiert sein. Sie müssen nicht in der gezeigten Kombination vorhanden sein. Es wird ausdrücklich darauf hingewiesen, dass die einzelnen Besonderheiten auch separat und in Alleinstellung in einem anderen Halter vorkommen könnten.

Im Folgenden wird ein Ausführungsbeispiel der Erfindung unter Bezugnahme auf die beigefügten Abbildungen beschrieben. Es zeigen:
- Figur 1: eine scheibenförmige Haltevorrichtung von ihrer Vorderseite;
- Figur 2: die Haltevorrichtung aus Figur 1 mit drei Abutmentrohlingen;
- Figur 3: die Haltevorrichtung aus Figur 1 von der Rückseite;
- Figur 4: eine Detailzeichnung einer Halteaufnahme der Haltevorrichtung aus Figur 3;
- Figur 5: einen Querschnitt von der Vorderseite zur Rückseite der Haltevorrichtung durch die Halteaufnahme einschließlich Abutmentrohling;
- Figur 6a, b: einen Längsschnitt von der Vorder- zur Rückseite der Haltevorrichtung in zwei unterschiedlichen Höhen;
- Figur 7: eine erste Ausführungsformen des Abutmentrohlings in einer perspektivischen Darstellung;
- Figur 8: eine zweite Ausführungsform des Abutmentrohlings in einer perspektivischen Darstellung.

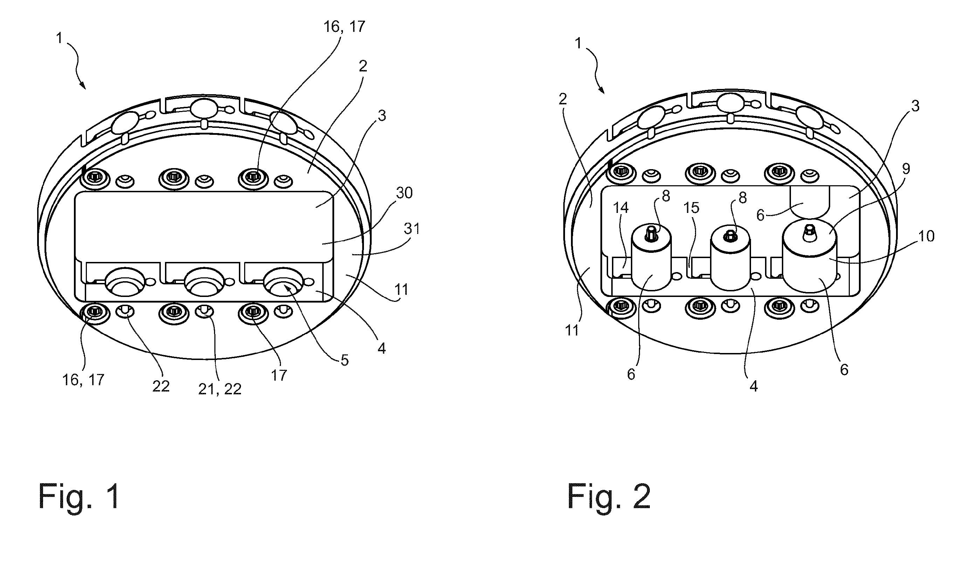

Bevorzugt hat die Haltevorrichtung 1 eine scheibenartige Form. Dies ist beispielsweise in Figur 1 gezeigt. Die äußere Form der Haltevorrichtung 1 ist im gezeigten Beispiel rund. Hierdurch passt sie in eine entsprechende Aufnahme einer Bearbeitungsmaschine, beispielsweise einer Fräsmaschine. Selbstverständlich kann die äußere Form der Haltevorrichtung 1 auch anders gestaltet sein, beispielsweise mit wenigstens zwei vorzugsweise parallel zueinander verlaufenden Außenseiten, etwa rechteckig oder quadratisch.

Bevorzugt weist die Haltevorrichtung 1 in ihrem Grundkörper 2 einen Ausschnitt 3 auf. Der Grundkörper 2 bildet entsprechend eine Umfassung oder einen Rahmen 31 mit innenliegenden Anlageflächen (Innenflächen) 4 und einem Bearbeitungsraum 30. Bevorzugt ist der gebildete Bearbeitungsraum 30 von zwei Seiten zugänglich, so dass eine Bearbeitung eines gehaltenen Abutmentrohlings beispielsweise mit einer Fräse, bevorzugt mit einer Dentalfräse, möglich ist. Bevorzugt ist der Ausschnitt 3 rechteckig, wobei die Ecken abgerundet sein können. Somit ergeben sich wenigstens zwei (vorzugsweise parallel) gegenüberliegende Anlagenflächen 4. Eine mögliche Gestaltung dieser Ausführungsform ist in Figur 1 gezeigt.

Bevorzugt weist die Haltevorrichtung 1 in ihren Innenflächen 4 Halteaufnahmen 5 auf. Dabei ist wenigstens eine Halteaufnahme 5 vorgesehen. In dem gezeigten Beispiel gemäß Figur 1 sind in der ersten Innenfläche 4 drei nebeneinander angeordnete Halteaufnahmen 5 angeordnet. Die gegenüberliegende Innenfläche 4 weist ebenfalls drei Halteaufnahmen 5 auf. Es können auch zwei, vier, sechs oder mehr Halteaufnahmen 5 in wenigstens einer der Seiten vorhanden sein. Die beiden, zu den Innenflächen 4 winkelig verlaufenden, bevorzugt rechtwinklig angeordneten, Flächen bzw. Innenflächen können ebenfalls Halteaufnahmen aufweisen.

Figur 2 zeigt die Haltevorrichtung 1 aus Figur 1 mit insgesamt vier Abutmentrohlingen 6, wobei drei der Abutmentrohlinge 6 in den Halteaufnahmen 5 der ersten Innenfläche 4 positioniert sind, während ein weiterer Abutmentrohling 6 in der Halteaufnahme 5 der gegenüberliegenden Innenfläche 4 positioniert ist.

In einer bevorzugten Ausführungsform sind die Halteaufnahmen 5 der Haltevorrichtung identisch. Dies setzt voraus, dass die Halteabschnitte des Abutmentrohlings ebenfalls identisch sind, d. h. dass die Halteabschnitte des Abutmentrohlings 6 mit den Halteaufnahmen 5 korrespondieren. Im vorliegenden Fall sind die Halteabschnitte und die gesamten Abutmentrohlinge 6 zylindrisch. Die Halteaufnahmen 5 sind folglich ebenfalls zylindrisch. Zu sehen ist, dass einer der Rohlinge 6 einen Korpus mit größerem Durchmesser als dem Durchmesser des Halteabschnitts aufweist; der Halteabschnitt ist aber mit dem des anderen Rohlings identisch.

In Figur 2 ist gezeigt, dass die hier verwendeten Abutmentrohlinge 6 an einem freien Ende 9 eines Rohlingkorpus 10 ein Implantatinterface 8 aufweisen, das industriell und mit hoher Präzision vorgefertigt ist und dessen Form sehr exakt gestaltet ist und nur minimale Toleranzen aufweist. Der Abutmentrohling 6 ist mit seinem Halteabschnitt derart in der Halteaufnahme 5 der Haltevorrichtung 1 positioniert, dass das Implantatinterface 8 ins Innere des Ausschnitts 3 ragt. Es ist somit frei zugänglich und wird gleichzeitig jedoch nicht durch Kräfte belastet. Das Implantatinterface hat keinen Kontakt zur Haltevorrichtung 1.

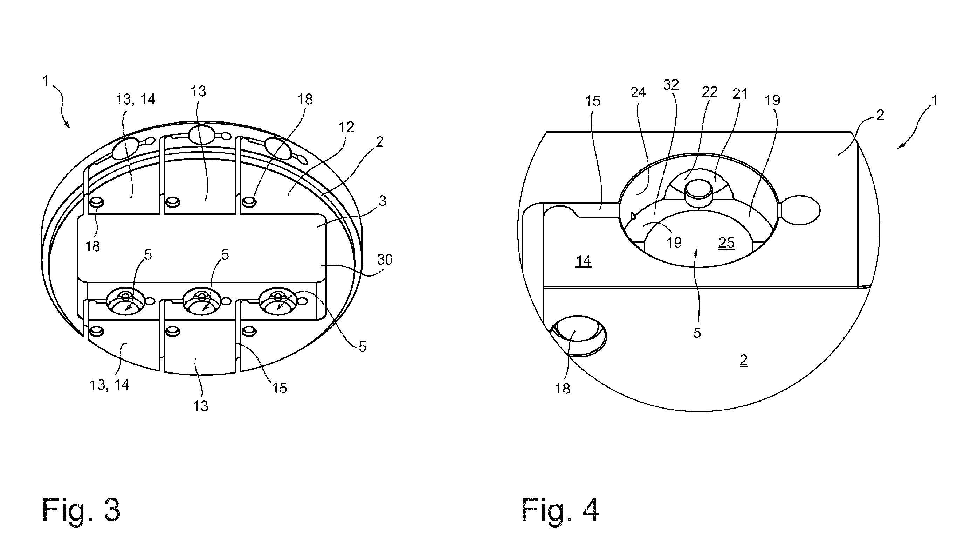

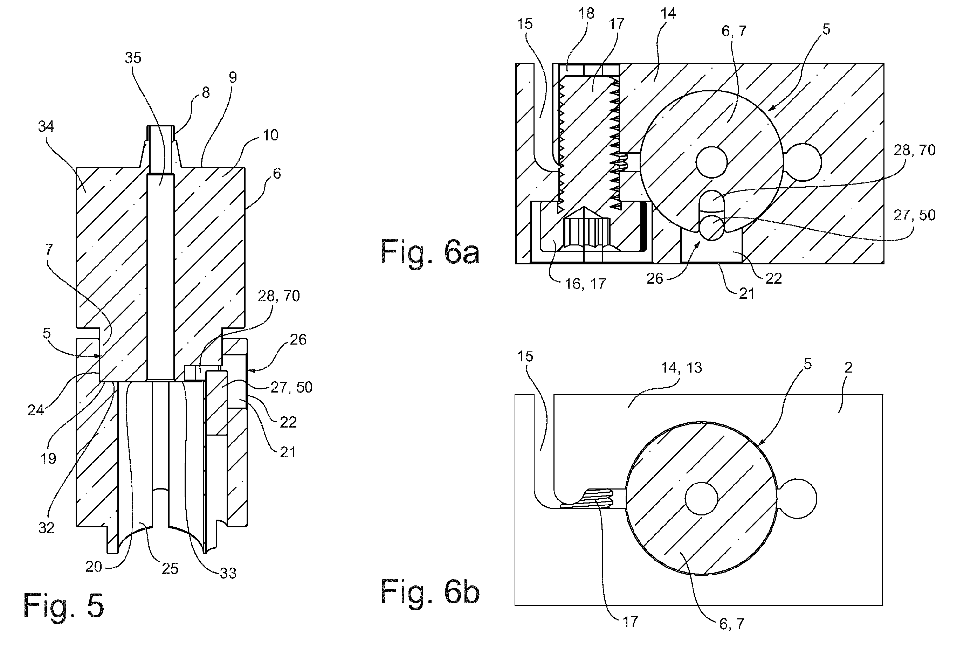

Während Figur 1 die Vorderseite 11 der Haltevorrichtung 1 zeigt, ist in Figur 3 die Rückseite 12 der Haltevorrichtung 1 dargestellt. Deutlich zu erkennen sind Spannvorrichtungen 13, die jeweils einer Halteaufnahme 5 zugeordnet sind. Die Spannvorrichtungen 13 sind in der hier gezeigten Form als Klemmbacken 14 ausgestaltet, die einstückig mit dem Grundkörper 2 der Haltevorrichtung 1 verbunden sind. Die Klemmbacken 14 werden durch erodierte Schlitze 15 gebildet. Die Klemmbacke 14 kann mittels eines Spannelements 16 (Fig. 6a) an dem Grundkörper 2 herangezogen werden, so dass der Abutmentrohling 6 kraftschlüssig in der Halteaufnahme 5 gehalten wird. Eine mögliche Ausbildung der bevorzugten Ausführungsform ist die Verwendung von Inbusschrauben oder anderen Schrauben 17, die in eine Gewindebohrung 18 der Klemmbacken 14 eingreifen.

Figur 4 zeigt eine Detailzeichnung der Halteaufnahme 5 als Bohrung. Im unteren Bereich der Halteaufnahme 5 ist ein Absatz 19 ausgebildet, der eine Auflagefläche 32 für eine Stirnfläche 33 des zweiten Endes 20 des Abutmentrohlings 6 bildet (Fig. 5).

In der Vorderseite 11 der Haltevorrichtung 1 sind in dem Bereich der Halteaufnahme 5, in dem der Absatz 19 vorgesehen ist, Bohrungen 21 vorhanden, die als Sichtfenster 22 dienen und eine optische Kontrolle ermöglichen, ob der Abutmentrohling 6 vollständig in der Haltevorrichtung 5 positioniert ist, also ob die Stirnfläche 33 Kontakt zu der Auflagefläche 32 hat.

Figur 5 zeigt einen Vertikalschnitt durch einen Teilbereich der Haltevorrichtung 1. In diesem Schnitt ist neben dem Grundkörper 2 der Haltevorrichtung 1 auch der Abutmentrohling 6 geschnitten. Der Bearbeitungsabschnitt 34 des Abutmentrohlings 6 hat beispielsweise einen größeren Durchmesser als der sich an ihn anschließende Halteabschnitt 7, dessen Form mit der Halteaufnahme 5 korrespondiert. In der hier gezeigten Ausführungsform weist der Abutmentrohling 6 eine Durchgangsbohrung 35 auf, die konzentrisch zur Längsachse des Abutmentrohlings und durch das Implantatinterface 8 verläuft. Die Durchgangsbohrung 35 weist einen Absatz nahe des Interfaces 8 auf, an dem ein Schraubenkopf einer Befestigungsschraube anliegen kann, damit das produzierte Abutment später mit dem Zahnimplantat in Mund des Patienten verschraubt werden kann.

In dem Schnitt gemäß Figur 5 ist zu erkennen, dass die von der Bohrung 24 gebildete Halteaufnahme 5 in dem zu dem Innenfläche orientierten Ende einen größeren Durchmesser aufweist als der zur Außenseite des Grundkörpers 2 angeordnete Bohrungsbereich 25. Hierdurch wird der Absatz 19 gebildet, der die Auflage 32 für den Abutmentrohling 6 bildet.

In einer bevorzugten Ausführungsform, insbesondere bei einer im Querschnitt rotationssymmetrischen Halteaufnahme 5, weist die Haltevorrichtung 1 einen Verdrehschutz 26 oder eine Verdrehsicherung auf. Der Verdrehschutz 26 wird bevorzugt durch ein Positionselement 50 an der Halteaufnahme 5 und ein Ausrichtungselement 70 am Halteabschnitt 7 gebildet. Der Verdrehschutz 26 kann beispielsweise durch einen Stift oder einen Steg gebildet werden, der in eine entsprechende Ausnehmung oder Nut im Abutmentrohling 6 eingreift. In Figur 5 ist eine mögliche Ausführungsform gezeigt. Hier ist ein Stift 27 in der Halteaufnahme 5 ausgebildet, der mit einer Nut 28 am Ende des Halteabschnitts 7 zusammenwirkt. Bei ordnungsgemäßem Sitz des Abutmentrohlings 6 in der Halteaufnahme 5 erstreckt sich der Stift 27 in die Nut 28 im Halteabschnitt 7 und sichert die Positionierung des Rohlings in der Haltevorrichtung 1.

Bevorzugt ist das Sichtfenster 22 in Form der Bohrung 21 ausgebildet. In dem hier gezeigten Beispiel (Figur 5) ist das Sichtfenster in Höhe des Verdrehschutzes 26 angeordnet. Selbstverständlich kann das Sichtfenster auch an der gegenüberliegenden Seite oder einer anderen geeigneten Stelle positioniert sein.

Die Figuren 6a und 6b zeigen einen Längsschnitt durch die Halteaufnahme, wobei in Figur 6a der Schnitt durch das Spannelement 16 erfolgt. Deutlich zu erkennen ist der erodierte Schlitz 15, der die Klemmbacke 14 jedenfalls teilweise vom Grundkörper 2 trennt. Das als Schraube 17 ausgebildete Spannelement 16 greift in die Gewindebohrung 18 ein. Die Klemmbacke 14 lässt sich durch Drehen der Schraube 17 in Richtung Halteaufnahme 5 bewegen, um einen Abutmentrohling 6 in der Halteaufnahme 5 vollumfänglich zu klemmen bzw. zu verspannen.

In Figur 6a ist nochmals der Verdrehschutz 26 in Form des Stiftes 27 gezeigt, der in die Nut 28 eingreift. Ebenso ist das Sichtfenster 22 dargestellt.

Figur 6b zeigt einen Schnitt oberhalb des Spannelements 16, um nochmals die Klemmbacke 14 und den Schlitz 15 sichtbar zu machen.

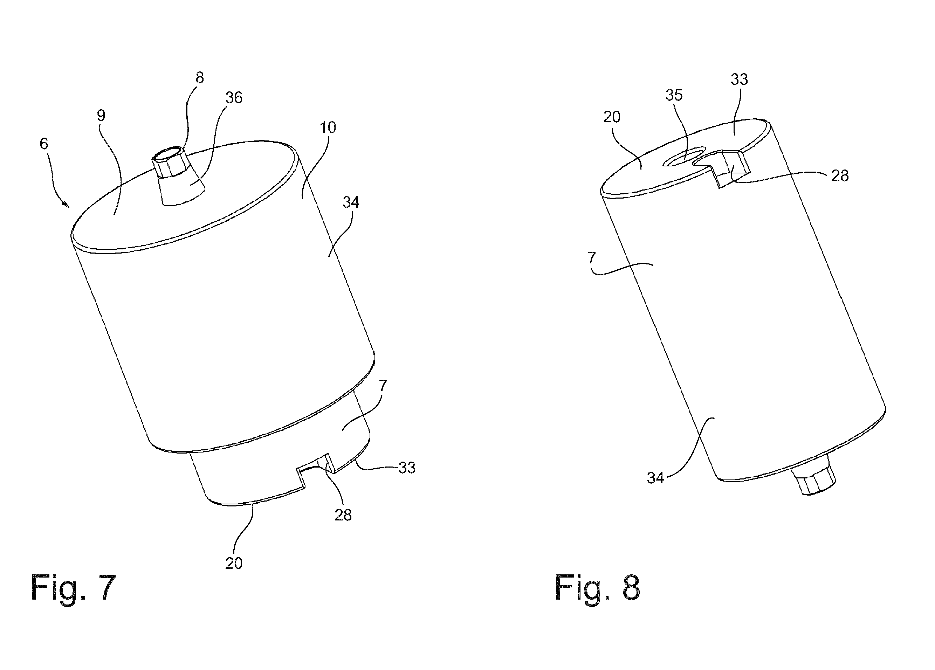

Die Figuren 7 und 8 zeigen zwei Ausführungsformen des Abutmentrohlings 6 aus unterschiedlichen Perspektiven.

Bei beiden Ausführungsformen ist an dem ersten Ende 9 des Abutmentrohlings 6 das Implantatinterface 8 angeordnet, dessen Außenkontur einen Mehrkant aufweist. Das Interface 8 umfasst eine kegelstumpfförmige Basis 36, an die sich der zylindrische Bearbeitungsbereich 34 des Rohlingkorpus 10 anschließt. Der ebenfalls zylindrische Halteabschnitt 7 ist mit dem Bearbeitungsbereich 34 verbunden und bildet an seiner in Figur 7 unteren Seite die Stirnfläche 33 des zweiten Endes 20 des Abutmentrohlings 6.

An dem zweiten Ende 20 des Abutmentrohlings 6 befindet sich die bevorzugt U-förmige Nut 28, in die der Stift 27 in der Halteaufnahme 5 eingreift (vgl. Figur 5). Die U-förmige Nut 28 ist bevorzugt an der Stirnseite 33 und in Richtung der Außenkontur des Halteabschnitts 7 offen.

Entlang der Längsachse des Abutmentrohlings 6 erstreckt sich die Durchgangsbohrung 35, die durch den gesamten Rohlingkorpus 10 verläuft. Die Durchgangsbohrung 35 tritt an dem Interface 8 und der Stirnfläche 33 aus dem Abutmentrohling 6 aus.

Beide gezeigten Ausführungsformen unterscheiden sich lediglich im Durchmesser des Bearbeitungsbereichs 34. Bei der ersten Ausführungsform des Abutmentrohlings 6 in Figur 7 weist der Bearbeitungsbereich 34 einen größeren Durchmesser auf als der Halteabschnitt 7. Dadurch ist der Bearbeitungsbereich 34 gegenüber dem Halteabschnitt 7 abgesetzt. In der zweiten Ausführungsform gemäß Figur 8 sind die Außendurchmesser des Bearbeitungsbereichs 34 und des Halteabschnitts 7 identisch. Der Bearbeitungsbereich 34 und der Halteabschnitt 7 bilden gemeinsam eine einheitliche zylindrische Außenkontur des Abutmentrohlings 6.

## Patentansprüche

1. Haltevorrichtung zum Halten eines Abutmentrohlings (6) mit einem Implantatinterface (8), einem sich an das Implantatinterface (8) anschließenden Bearbeitungsabschnitt (34) und mit einem von dem Implantatinterface (8) beabstandeten Halteabschnitt (7) mit Ausrichtungselement (70), umfassend
einen Grundkörper (2) mit einer Halteaufnahme (5) zum Halten des Abutmentrohlings (6),
wobei
die Halteaufnahme (5) ein Positionierelement (50) umfasst,
die Halteaufnahme (5) mit dem Halteabschnitt (7) des Abutmentrohlings (6) derart korrespondiert, dass
- das Positionierelement (50) der Halteaufnahme (5) mit dem Ausrichtungselement (70) des Abutmentrohlings (6) zusammen wirkt,
- der Abutmentrohling (6) mit seinem Halteabschnitt (7) in der Halteaufnahme (5) verdrehsicher in einer vorgegebenen Position gehalten wird,
- das Implantatinterface (8) von der Haltevorrichtung (1) beabstandet ist,
- der sich an das Implantatinterface (8) anschließende Bearbeitungsabschnitt (34) des Abutmentrohlings (6) frei zugänglich für die Bearbeitung ist.

2. Haltesystem zum Halten eines Abutmentrohlings für die Bearbeitung umfassend den Abutmentrohling (6) und eine Haltevorrichtung (1), wobei
der Abutmentrohling (6) ein Implantatinterface (8), einen sich an das Implantatinterface (8) anschließenden Bearbeitungsabschnitt (34) und einen von dem Implantatinterface (8) beabstandeten Halteabschnitt (7) aufweist,
die Haltevorrichtung (1) einen Grundkörper (2) mit wenigstens einer Halteaufnahme (5) zum Halten des Abutmentrohlings (6) aufweist,
wobei
- der Halteabschnitt (7) ein Ausrichtungselement (70) umfasst,
- die Halteaufnahme (5) ein Positionierelement (50) umfasst,
- die Halteaufnahme (5) mit dem Halteabschnitt (7) des Abutmentrohlings (6) derart korrespondiert und das Positionierelement (50) der Halteaufnahme (5) mit dem Ausrichtungselement (70) des Abutmentrohlings (6) derart zusammenwirkt, dass
- der Abutmentrohling (6) mit seinem Halteabschnitt (7) in der Halteaufnahme (5) verdrehsicher und in einer vorgegebenen Position gehalten wird,
- das Implantatinterface (8) von der Haltevorrichtung (1) beabstandet und der Bearbeitungsabschnitt (34) des Abutmentrohlings (6) frei zugänglich für die Bearbeitung ist.

3. Haltevorrichtung oder Haltesystem nach einem der vorhergehenden Ansprüche, **dadurch gekennzeichnet, dass** die Halteaufnahme (5) eine Ausnehmung, bevorzugt eine Bohrung (24) oder eine Sackbohrung, aufweist, in die sich der Halteabschnitt (7) des Abutmentrohlings (6) wenigstens teilweise erstreckt.

4. Haltevorrichtung oder Haltesystem nach einem der vorhergehenden Ansprüche, **dadurch gekennzeichnet, dass**
- der Grundkörper (2) der Haltevorrichtung (1) einen Ausschnitt (3) aufweist, durch den eine Umfassung mit wenigstens einer Innenfläche (4) und ein zugänglicher Bearbeitungsraum (30) gebildet wird;
- die Halteaufnahme (5) an der Innenfläche (4) der Umfassung derart angeordnet ist, dass sich ein in der Halteaufnahme (5) gehaltenen Abutmentrohling (6) in den Bearbeitungsraum (30) erstreckt.

5. Haltevorrichtung oder Haltesystem nach einem der vorhergehenden Ansprüche, **dadurch gekennzeichnet, dass** während des Haltens des Abutmentrohlings (6) in der Halteaufnahme (5) keine Kräfte von der Haltevorrichtung (1) auf das Implantatinterface (8) ausgeübt werden.

6. Haltevorrichtung oder Haltesystem nach einem der vorhergehenden Ansprüche, **dadurch gekennzeichnet, dass** das Ausrichtungselement (70) eine Nut (28) ist, die bevorzugt vom freien Ende des Halteabschnitts (7) aus zugänglich ist und/oder das Positionierelement (50) bevorzugt ein Steg oder ein Stift (27) ist, der bevorzugt mit der Nut (28) korrespondiert.

7. Haltevorrichtung oder Haltesystem nach einem der vorhergehenden Ansprüche, **dadurch gekennzeichnet, dass** die Haltevorrichtung (1) eine Beobachtungsöffnung aufweist, die bevorzugt ein Sichtfenster (22) ist und/oder die bevorzugt im Bereich eines Anschlags der Halteaufnahme (5) angeordnet ist, um den einwandfreien Sitz des Abutmentrohlings (6) in der Halteaufnahme (5) der Haltevorrichtung (1) optisch zu beobachten.

8. Haltevorrichtung oder Haltesystem nach einem der vorhergehenden Ansprüche, **dadurch gekennzeichnet, dass** der Halteaufnahme (5) eine Grundfläche aufweist, die nicht rotationssymmetrisch ist, bevorzugt rund, oval oder mehreckig und/oder besonders bevorzugt zwei parallele Seiten hat.

9. Haltevorrichtung oder Haltesystem nach einem der vorhergehenden Ansprüche, **dadurch gekennzeichnet, dass** die Halteaufnahme (5) eine Klemmvorrichtung oder Spannvorrichtung (13) umfasst, so dass eine kraftschlüssige Verbindung zwischen der Klemmvorrichtung oder Spannvorrichtung (13) und dem Halteabschnitt (7) des Abutmentrohlings (6) herstellbar ist.

10. Haltevorrichtung oder Haltesystem nach dem vorhergehenden Anspruch, **dadurch gekennzeichnet, dass** die Klemmvorrichtung oder Spannvorrichtung (13) eine Klemmbacke (14) umfasst, die bevorzugt wenigstens einen Teil einer Seitenwand der Halteaufnahme (5) bildet, und die bevorzugt mittels eines Befestigungselements oder Spannelements in ihrer Position derart verändert werden kann, dass die kraftschlüssige Verbindung erzeugt wird.

11. Abutmentrohling zum Halten in einer Haltevorrichtung nach einem der vorhergehenden Ansprüche, umfassend,
- ein Implantatinterface (8),
- einen sich an das Implantatinterface (8) anschließenden Bearbeitungsabschnitt (34) und
- einen von dem Implantatinterface (8) beabstandeten Halteabschnitt (7) mit einem Ausrichtungselement (70),
wobei das Ausrichtungselement (70) mit einem Positionierelement (50) einer Halteaufnahme (5) einer Haltevorrichtung (1) korrespondiert und derart zusammenwirkt, dass der Abutmentrohling (6) in der Halteaufnahme (5) verdrehsicher gehalten wird,
**dadurch gekennzeichnet,**
**dass** der Abutmentrohling (6) an seinem Halteabschnitt (7) einseitig in die Halteaufnahme (5) einspannbar ist, so dass das Implantatinterface (8) von der Haltevorrichtung (1) beabstandet ist.

12. Verfahren zum Halten und zur Bearbeitung eines Abutmentrohlings mittels einer Haltevorrichtung (1) mit den folgenden Schritten
- Bereitstellen einer Haltevorrichtung (1) nach Anspruch 1 mit wenigstens einer Halteaufnahme (5) für den Abutmentrohling (6),
- Bereitstellen eines Abutmentrohlings (6), der an einem Ende ein Implantatinterface (8) aufweist und einen Halteabschnitt (7) hat, der von dem Implantatinterface (8) beabstandet ist,
- Einseitiges Einsetzen des Abutmentrohlings (6) mit seinem Halteabschnitt (7) in die korrespondierende Halteaufnahme (5) der Haltevorrichtung (1), wobei der Halteabschnitt (7) und die Haltevorrichtung (1) derart miteinander korrespondieren, dass der Abutmentrohling (6) verdrehsicher und ausgerichtet in der Haltevorrichtung (1) gehalten wird und das Implantatinterface (8) von der Haltevorrichtung (1) beabstandet ist,
- Einsetzen der Haltevorrichtung (1) in eine korrespondierende Aufnahme einer Bearbeitungsmaschine, insbesondere einer Fräsmaschine, und Befestigen der Haltevorrichtung (1) in der Aufnahme,
- spanendes Bearbeiten eines frei zugänglichen Bearbeitungsabschnitts (34) des Abutmentrohlings (6), um ein Abutment mit einem Stiftaufbau herzustellen,
- Entnehmen des Halteabschnitts (7) des Abutmentrohlings (6) aus der Halteaufnahme (5) der Haltevorrichtung (1).

13. Verfahren nach Anspruch 12, **gekennzeichnet durch** wenigstens einen der weiteren Schritte:
- Abtrennen des modellierten Abutments von dem Halteabschnitt (7) des Abutmentrohlings (6), bevorzugt am distalen Ende des Stiftaufbaus des Abutments,
- optionales Nacharbeiten des freien Endes des Stiftaufbaus des Abutments.

14. Verfahren nach Anspruch 12 oder 13, **gekennzeichnet durch** wenigstens einen der weiteren Schritte:
- Lösen der Haltevorrichtung (1) aus der Aufnahme der Bearbeitungsmaschine,
- optionales Säubern der Haltevorrichtung (1) zur Wiederverwendung für einen weiteren Abutmentrohling.

15. Verfahren nach einem der Ansprüche 12 bis 14, **gekennzeichnet durch** wenigstens einen der weiteren Schritte:
- optionales Befestigen des Abutmentrohlings (6) in der Halteaufnahme (5) mittels einer Spannvorrichtung (13),
- optionales Überprüfen des Sitzes des Abutmentrohlings (6) in der Halteaufnahme (5) **durch** ein optisches Überprüfungsmittel in der Haltevorrichtung (1), das bevorzugt ein Sichtfenster (22) ist,
- Bearbeiten des Abutmentrohlings (6) **durch** Fräsen,
- Beginnen der Bearbeitung des Bearbeitungsabschnitts (34) des Abutmentrohlings (6) nahe des Implantatinterfaces (8), so dass zunächst ein Emergenzprofil mit einem sich anschließenden Stiftaufbau modelliert wird.
